# DEMANDE DE BREVET EUROPEEN

(11) **EP 1 150 259 A1**
(43) Date de publication de la demande: **31.10.2001**
(21) Numéro de dépôt: 00410043.4
(22) Date de dépôt: 27.04.2000
(51) Int. Cl.: G07F 7/10, G07F 7/08

(54) **Système de gestion de titre rechargeable d'accès à un service**

(71) Demandeur: Ascom Monétel SA, 07500 Guilherand-Granges (FR)
(72) Inventeur: Frank, Olivier, 07300 Plats (FR)
(74) Mandataire: de Beaumont, Michel

(57) **Abrégé**

L'invention concerne un système de gestion de titres rechargeables d'accès à un service, dans lequel l'opération de paiement du service est séparée de l'opération de rechargement du titre, cette dernière opération étant faite lors de l'insertion du titre dans un poste de validation d'accès au service.

## Description

Pour de nombreux services, on utilise maintenant des titres, tickets ou cartes (ces termes seront indifféremment utilisés ci-après) munis de moyens de mémorisation, ces titres étant rechargeables après que le service a été utilisé un certain nombre de fois ou pendant une certaine durée. Par exemple, le titre d'accès peut être un titre d'accès à des locaux normalement payants ou réservés, un titre de transport, une carte de paiement permettant d'accéder à de très nombreux types de services ou d'acheter des produits. Un titre rechargeable comprend une mémoire qui stocke des données d'identification non effaçables et protégées et des données correspondant à un droit d'utilisation ou à une quotité de droits.

Dans le cas où le titre est un ticket d'accès à un système de transport, l'utilisateur présente son ticket à un valideur chaque fois qu'il monte dans le moyen de transport ou qu'il veut ouvrir un portillon d'accès. L'entrée est validée ou non selon l'état du ticket. Eventuellement un dispositif sonore ou autre prévient un contrôleur du fait que le ticket est épuisé ou non valide, ou encore le ticket est annulé ou avalé par le valideur.

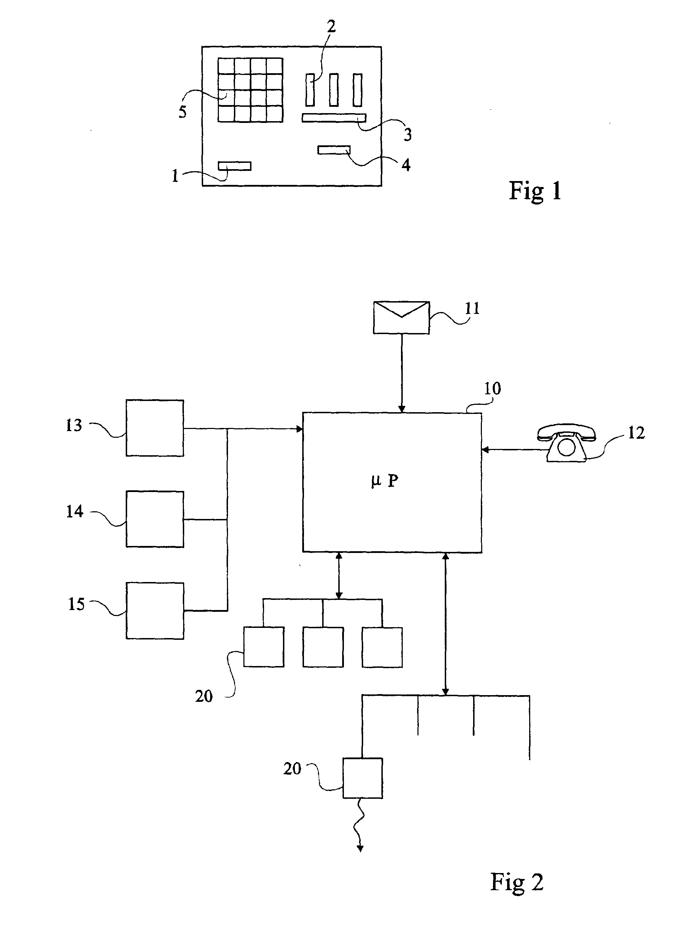

Habituellement, quand il veut recharger un tel titre rechargeable, un utilisateur doit se présenter à un guichet spécialisé ou auprès d'un distributeur automatique pour effectuer un paiement et recharger son titre. Un distributeur automatique, représenté en figure 1, comprend un emplacement 1 destiné à recevoir le titre rechargeable et diverses entrées de moyens de paiement, par exemple des fentes 2 pour des pièces de monnaies, une fente 3 pour des billets de banque, une fente 4 pour une carte de crédit et un clavier 5. Pour recharger son titre, l'utilisateur le place sur l'emplacement 1 et introduit de l'argent dans les fentes 2 et/ou 3, ou bien introduit une carte de crédit dans la fente 4 et pianote un code sur un clavier 5 qui lui permet d'effectuer une validation. Le clavier peut permettre de choisir les paramètres du rechargement (type, montant, durée...) que l'utilisateur désire effectuer et éventuellement de donner un ordre de virement. Divers autres systèmes automatiques de rechargement sont connus.

Ces systèmes de rechargement de titres rechargeables présentent des inconvénients, notamment quand les titres en question sont des titres de transport à durée de validité mensuelle. En effet, un peu avant la fin d'un mois, les utilisateurs doivent recharger leur titre et pour cela ils doivent se déplacer vers un distributeur automatique, une agence commerciale, un dépositaire, ou autre. Dans tous les cas, étant donné que tous les utilisateurs tendent à se déplacer sensiblement à la même période, il se produit inévitablement des phénomènes de files d'attente désagréables pour l'utilisateur et difficiles à gérer pour l'exploitant. Cet inconvénient s'accentue quand le début d'un mois ou autre début d'une période de validité correspond à la fin d'une période de vacances, par exemple à une rentrée scolaire. Si l'exploitant ne veut pas être débordé, il est obligé de faire des investissements importants en appareils automatiques de rechargement de tickets et/ou en nombre de dépositaires ou d'agences commerciales. Ces appareils, destinés à permettre de traiter des périodes de pointes, sont peu utilisés pendant une très grande partie d'un mois, ce qui rend les investissements correspondants particulièrement problématiques.

Ainsi, un objet de la présente invention est de prévoir un nouveau système de gestion de titre rechargeable, permettant notamment d'éviter les problèmes de file d'attente ou de multiplication de points de distribution.

Un autre objet de la présente invention est de prévoir un valideur permettant un rechargement de la carte.

Pour atteindre ces objets, la présente invention prévoit un système de gestion de titres rechargeables d'accès à un service, dans lequel l'opération de paiement du service est séparée de l'opération de chargement ou de rechargement du titre, cette dernière opération étant faite lors de la présentation du titre à un poste de validation d'accès au service.

Selon un mode de réalisation de la présente invention, des informations de paiement correspondant à des numéros de cartes déterminés sont stockées au niveau d'un poste central qui transmet périodiquement une partie au moins de ces informations à au moins certains choisis des postes de validation.

Selon un mode de réalisation de la présente invention, lors du paiement, l'utilisateur du titre fournit une indication sur le ou les premiers postes de validation auxquels il est susceptible de se rendre.

Selon un mode de réalisation de la présente invention, applicable à des titres à rechargement périodique, à la fin de chaque période, chaque titre présenté à un valideur est automatiquement rechargé, la validité du titre étant vérifiée ensuite au niveau d'un poste central par comparaison entre la liste des titres rechargés et une liste de titres pour lesquels le rechargement a été payé, une liste étant ensuite dressée des titres pour lesquels le rechargement a été effectué et non payé, cette dernière liste étant transmise périodiquement à certains ou à tous les valideurs pour leur permettre d'inhiber totalement ou partiellement les titres appartenant à cette dernière liste.

Selon un mode de réalisation de la présente invention, en vue du chargement ou du rechargement d'un titre, le système détermine automatiquement selon des critères statistiques certains postes de validation auxquels ledit titre est susceptible d'être présenté.

La présente invention prévoit aussi un valideur d'accès à un service par un titre rechargeable, comprenant des moyens pour lire le numéro du titre, recharger le titre, et stocker une liste de titres dont la validation est autorisée et/ou interdite.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente schématiquement un distributeur automatique classique ;
la figure 2 illustre le schéma général d'un système de gestion de titre rechargeable selon la présente invention ;.
la figure 3 représente schématiquement un exemple de valideur selon la présente invention ; et
la figure 4 est un organigramme illustrant un exemple d'utilisation du valideur de la figure 3.

Selon un aspect fondamental de la présente invention, l'opération de rechargement du titre est décorrélée de l'acte d'achat/vente de ce rechargement.

La présente invention prévoit un système de gestion centralisé des paiements 10, constitué d'un système informatique, tel qu'un microprocesseur (*µ*P) associé à une mémoire. Le microprocesseur gère diverses listes liées au paiement du rechargement d'un titre. Les données peuvent être introduites dans le microprocesseur par un opérateur dépouillant du courrier 11, par un opérateur recevant des appels téléphoniques 12, ou bien encore directement par réception d'une information de transfert bancaire 13, par information d'un versement de fond à partir d'une carte de crédit 14, par information à partir d'un guichet de paiement automatique 15, par information à partir d'un réseau de communication privé ou public. Ainsi, on prévoit que l'utilisateur du titre peut donner un ordre de rechargement par tout moyen de paiement actuellement connu ou susceptible de se développer. Notamment cet ordre peut être donné par un utilisateur à partir de son domicile ou de son lieu de travail. Cet ordre est pris en charge de façon automatique ou manuelle par un système de gestion de liste tel que le microprocesseur 10. Le microprocesseur établit une liste "blanche" de tous les numéros de titre pour lesquels un rechargement a été demandé. La seule mémorisation de ces numéros de titre pourra suffire quand on prévoit seulement une possibilité de rechargement à l'identique. D'autres données seront contenues dans la liste blanche quand on prévoira que le nouveau chargement peut ne pas être identique au chargement précédent. Le microprocesseur pourra stocker également une liste "noire", par exemple une liste de numéros de tickets ou de cartes volés, perdus ou repérés comme étant frauduleux.

Le rechargement du titre rechargeable, c'est-à-dire l'inscription dans la mémoire de ce titre d'informations relatives à la possibilité d'utiliser un certain service pendant une certaine durée ou pour un certain nombre de fois, se fait non plus au niveau de distributeurs spéciaux mais au niveau des valideurs 20 utilisés lors de chaque utilisation du titre rechargeable. Ces valideurs sont couplés directement ou indirectement à l'unité centrale de gestion 10.

Le rechargement d'un titre par chaque valideur peut se faire de diverses manières. L'ensemble de la liste blanche peut être communiqué à tous les valideurs d'un réseau, ou bien des fractions de listes sont communiquées à tous les valideurs susceptibles d'être empruntés par certains groupes d'utilisateurs ou encore à des valideurs particuliers dont l'utilisateur a indiqué lors de son achat qu'il les utiliserait dans un certain délai, par exemple une semaine, après le paiement de son rechargement.

D'autres schémas pourront être adoptés pour éviter de surcharger la mémoire de chacun des valideurs si la liste "blanche" est très longue, ce qui peut se produire dans un réseau rassemblant un très grand nombre d'usagers. Par exemple, dans un réseau d'autobus, les valideurs échangent des données avec le microprocesseur 10 par l'intermédiaire de liaisons de type infrarouge au radio après ou pendant les opérations d'inspection journalières ou de remplissage de carburant. Ce type de liaison a une capacité limitée et on évitera de transférer des listes trop longues équivalant par exemple à plus de 5000 numéros, 500 numéros de liste noire et 4500 numéros validés.

Un mode de gestion d'un réseau va être indiqué uniquement à titre d'exemple ci-après dans le cas d'un réseau d'autobus. On suppose que les titres rechargeables sont des titres de transport prépayés d'une durée d'un mois que l'on recharge à l'identique à la fin d'un mois pour le mois suivant.

Le système central de gestion 10 mémorise comme précédemment une liste "blanche" de tous les numéros de ticket pour lesquels des clients ont payé un rechargement. Le système central mémorise également une liste "noire" des numéros de ticket à proscrire, par exemple des tickets volés, ou des tickets dont on a repéré qu'ils avaient été falsifiés. Le système central de gestion mémorise également une liste "rouge" et une liste "bleue" dont les fonctions seront exposées ci-après.

On prévoira dans ce système que, entre un jour choisi du mois, par exemple le 23 et le dernier jour du mois, tout ticket présenté dans un autobus sera automatiquement rechargé par un valideur de cet autobus et que le valideur établira une liste "grise" des cartes "vues" et rechargées. Cette liste grise est communiquée tous les soirs au central et cette liste est comparée à la liste "blanche" sus-indiquée. Si un numéro de liste grise ne se trouve pas sur la liste blanche, il est placé sur une liste "rouge" qui indique qu'il s'agit d'une carte qui vient d'être rechargée mais pour laquelle il n'y a pas eu de paiement. Cette liste rouge est ensuite retransmise à tous les valideurs susceptibles d'être concernés par l'opération. Quand le valideur reçoit un numéro présent sur sa liste rouge entre le 23 et la fin du mois, il signale simplement à l'utilisateur qu'il a omis de recharger son titre. Si au premier jour du mois suivant, le rechargement n'a pas été payé, le valideur qui voit un ticket en liste "rouge", inhibe ce ticket par tout moyen connu et l'usager doit alors effectuer une démarche spéciale s'il souhaite le recharger. Si l'on admet que la plupart des usagers renouvellent normalement leurs titres, le nombre de tickets en liste rouge sera très faible par rapport au nombre de tickets en liste blanche. Etant donné que seuls les numéros de ticket de la liste rouge, éventuellement avec les numéros de la liste noire, devront être chargés dans les valideurs, la capacité de mémoire nécessaire et le temps de chargement des listes sont considérablement réduits.

On pourra également prévoir au niveau du système central de gestion une liste "bleue" qui correspond à tous les numéros de la liste blanche (rechargement payé) pour lesquels pendant les derniers jours du mois, aucun ticket correspondant n'a été présenté à un valideur. A la fin du mois, cette liste bleue est communiquée aux valideurs pour que, s'ils reçoivent un ticket correspondant, ils le rechargent normalement.

Bien entendu de nombreuses variantes et modifications de ce système peuvent être imaginées et utilisées par l'homme de l'art, un aspect fondamental de la présente invention résidant dans la décorrélation entre l'acte d'achat d'un service et l'acte de rechargement d'un titre d'accès au service.

On pourra également prévoir de ne vérifier les titres de transport que par sondage, par exemple en se basant sur des informations de "fidélité" de clientèle et en inspectant moins les titres dont il s'avère qu'ils sont régulièrement rechargés que les titres dont le rechargement est irrégulier.

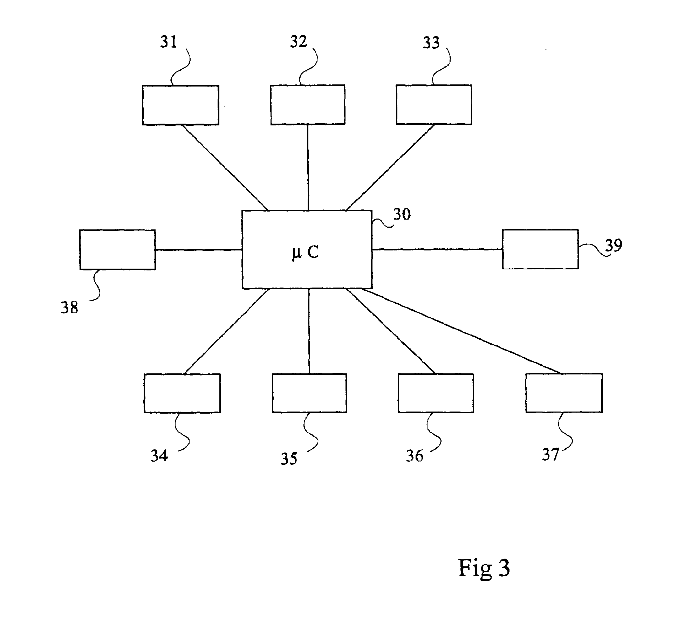

La présente invention prévoit un dispositif de validation comprenant non seulement des moyens pour lire les unités d'accès ou les autorisations d'accès et pour débiter éventuellement le titre mais comprenant en outre des moyens pour recharger le titre. Un valideur 20 correspondant à l'exemple décrit précédemment est schématiquement représenté en figure 3. Un microcontrôleur 30 gère les opérations du valideur. Ce valideur comprend une première interface 31 pour communiquer avec des équipements embarqués, par exemple un GPS, une seconde interface infrarouge, GSM ou radio 32 pour communiquer périodiquement avec l'unité de gestion 10 et notamment pour lui transférer des données statistiques contenues dans une mémoire 38 et recevoir des données et une troisième interface 33 pour communiquer avec un titre de transport.

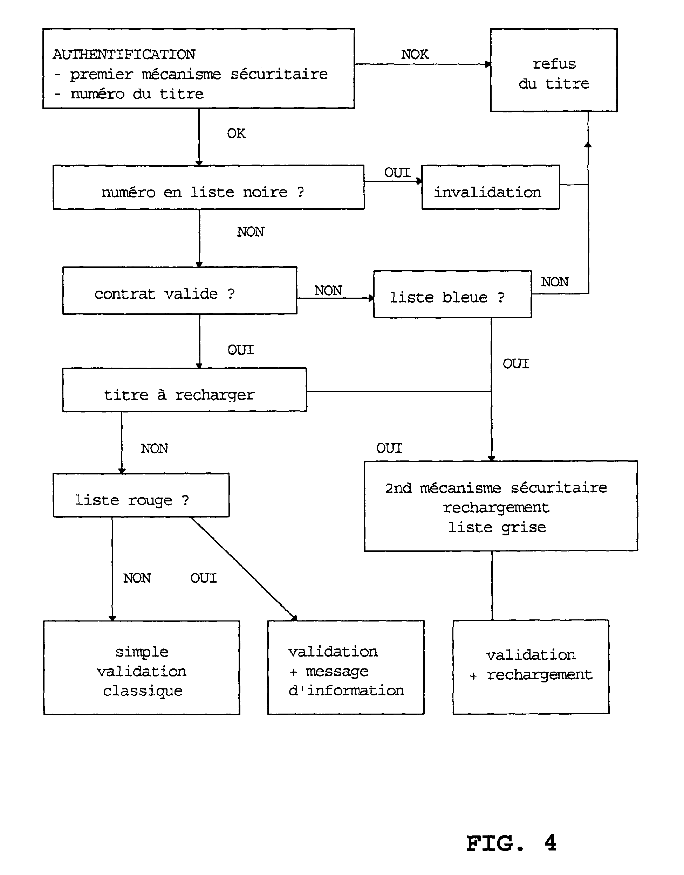

En présence d'un titre de transport, le valideur va suivre les opérations schématisées en figure 4. Le titre va d'abord être authentifié par un mécanisme de sécurité basé sur des clés secrètes contenues dans la mémoire du valideur puis il y aura confrontation du numéro du titre avec la liste noire avant l'engagement des opérations de recherche du contrat valide. Cette première phase est commune entre un valideur selon l'invention et un valideur de l'art antérieur. Une première mémoire 34, qui contient notamment au moins une clé secrète et la liste noire alimente le microcontrôleur 30 pour ces opérations habituelles.

Ensuite, un valideur 20 pour l'application décrite de l'invention va permettre d'effectuer les opérations supplémentaires suivantes :
si le titre est invalide, il y aura confrontation de son numéro avec la liste bleue contenue dans une mémoire 35 ; si le titre figure dans la liste bleue, il sera considéré valide puis le processus de rechargement à l'identique décrit ci-dessous sera déclenché ;
une mémoire 36 fournit les règles de rechargement du titre au processeur 30 ; elle contient notamment les données permettant d'identifier un titre à rechargement à l'identique et éventuellement la liste blanche ;
si le titre est identifié comme un titre à recharger, un second mécanisme de sécurité similaire au premier mentionné ci-dessus va se dérouler permettant d'être sûr que le valideur 20 est autorisé à écrire des données sur un titre ; ensuite, les données de rechargement seront transmises au titre par l'interface 33 ;
si le titre n'est pas à recharger, il y aura toutefois confrontation de son numéro avec la liste rouge contenue dans une mémoire 37 ; si le titre est en liste rouge, la validation pourra s'accompagner d'un message transmis à l'utilisateur par l'intermédiaire d'un afficheur 39 servant à lui rappeler qu'il doit effectuer le paiement correspondant au rechargement à l'identique déjà effectué ;
enfin, dans tous les cas de rechargement, l'opération effectuée sera mémorisée dans une liste grise contenue dans la mémoire 38 et destinée à être transférée au centre de gestion 10 par l'intermédiaire de l'interface 32.

Le rechargement à l'identique décrit dans l'exemple précédent est parfaitement adapté dans le cadre d'abonnements prépayés. Un des avantages de ce système est de pouvoir garantir le pré-paiement du service. Toutefois, il est possible d'accorder plus de flexibilité et d'autoriser l'utilisateur du titre à s'en servir au début d'une nouvelle période après un rechargement à l'identique, avant d'avoir reçu le paiement ; il s'agira alors d'une configuration semi-prépayée.

Un autre avantage de l'invention est de permettre de traiter le chargement dans un titre de n'importe quel achat de service. Dans ce cas, les valideurs effectueront ce chargement en identifiant dans la liste blanche présente dans leur mémoire 36 les numéros des titres à charger, et transmettront au titre depuis cette liste blanche par exemple toutes les données caractérisant le service payé. On optimisera le volume de la mémoire des valideurs en distribuant uniquement des morceaux de liste blanche dans une partie des valideurs existants selon les critères déjà mentionnés.

## Revendications

1. Système de gestion de titres rechargeables d'accès à un service, **caractérisé en ce que** l'opération de paiement du service est séparée de l'opération de chargement ou de rechargement du titre, cette dernière opération étant faite lors de la présentation du titre à un poste de validation d'accès au service (20).

2. Système selon la revendication 1, **caractérisé en ce que** des informations de paiement correspondant à des numéros de cartes déterminés sont stockées au niveau d'un poste central (10) qui transmet périodiquement une partie au moins de ces informations à au moins certains choisis des postes de validation.

3. Système selon la revendication 1, **caractérisé en ce que**, lors du paiement, l'utilisateur du titre fournit une indication sur le ou les premiers postes de validation auxquels il est susceptible de se rendre.

4. Système selon la revendication 1, applicable à des titres à rechargement périodique, **caractérisé en ce que**, à la fin de chaque période, chaque titre présenté à un valideur est automatiquement rechargé, la validité du titre étant vérifiée ensuite au niveau d'un poste central par comparaison entre la liste des titres rechargés et une liste de titres pour lesquels le rechargement a été payé, une liste étant ensuite dressée des titres pour lesquels le rechargement a été effectué et non payé, cette dernière liste étant transmise périodiquement à certains ou à tous les valideurs pour leur permettre d'inhiber totalement ou partiellement les titres appartenant à cette dernière liste.

5. Système selon la revendication 1, **caractérisé en ce que**, en vue du chargement ou du rechargement d'un titre, il détermine automatiquement selon des critères statistiques certains postes de validation auxquels ledit titre est susceptible d'être présenté.

6. Valideur d'accès à un service par un titre rechargeable, **caractérisé en ce qu'**il comprend des moyens pour :
- lire le numéro du titre,
- recharger le titre, et
- stocker une liste de titres dont la validation est autorisée et/ou interdite.
